# EUROPEAN PATENT SPECIFICATION

(11) **EP 3 864 740 B1**
(45) Date of publication and mention of the grant of the patent: **03.04.2024**
(21) Application number: 18811934.1
(22) Date of filing: 09.10.2018
(51) Int. Cl.: H02K 11/215, H02K 15/03, H02K 29/08

(54) **APPARATUS AND METHOD FOR ASSEMBLING A MAGNETIC POSITION SENSOR ON THE ROTOR OF AN ELECTRICAL MACHINE**
VORRICHTUNG UND VERFAHREN ZUR MONTAGE EINES MAGNETISCHEN POSITIONSSENSORS AM ROTOR EINER ELEKTRISCHEN MASCHINE
APPAREIL ET PROCÉDÉ D'ASSEMBLAGE D'UN CAPTEUR DE POSITION MAGNÉTIQUE SUR LE ROTOR D'UNE MACHINE ÉLECTRIQUE

(43) Date of publication of application: 18.08.2021
(73) Proprietor: Mavel EDT S.p.A., 11026 Pont-Saint-Martin (AO) (IT)
(72) Inventor: BERTOLDO, Andrea, 11026 Point Saint Martin (AO) (IT); TONINO, Andrea, 11026 Point Saint Martin (AO) (IT)
(74) Representative: Garavelli, Paolo
(86) International application number: PCT/IT2018/000126
(87) International publication number: WO 2020/075203

(56) References cited:
- JP-A- 2003 209 953
- JP-A- 2008 131 678
- US-A1- 2018 278 132

## Description

The present invention refers to an apparatus and a method for assembling a magnetic position sensor on the rotor of an electrical machine; in particular, it refers to the rotary part of a magnetic position sensor for measuring the angular position of the rotor of an electrical machine.

More in particular, the invention refers to an apparatus and a method for assembling a magnetic element, which is the magnetic position sensor, on the rotor of an asynchronous reluctance motor, for example of the type assisted by permanent magnets, to allow its accurate assembly on the rotor, in order to guarantee a high measuring accuracy of the angular position of the rotor.

Electrical machines are known, in particular electric motors, and it is known how to use inverters connected to the motors to check its operation.

A control parameter of synchronous reluctance electric motors assisted by permanent magnets, used by the inverter, is the instantaneous angular position of the magnetic poles of the rotor with respect to the magnetic field created by the stator windings.

In known motors, and in particular in highperformance synchronous reluctance electric motors, for example to be used in the motor vehicle field, it is necessary to accurately know the angular position of the rotor to check the motor operation.

For such purpose, it is known to use a magnetic position sensor having a part fastened to the rotor shaft to measure its angular position, for example as disclosed in International patent application WO2018099667.

Such known sensor comprises a magnet, fastened to the rotation shaft of the rotor, and a fixed part connected to a frame of the electric motor, said fixed part comprising Hall-effect sensors and means for transmitting the output signals of the sensor.

In order to obtain an accurate measure of the angular position of the rotor, it is necessary that the magnetic sensor is accurately fastened to the rotation shaft of the rotor, so that the magnetic field of the magnet fastened to the rotary part is aligned with the magnetic field of the rotor with a minimum error.

JP 2003 209953 A and US 2018/278132 A1 disclose an apparatus for assembling a magnetic position sensor on the rotor of an electrical machine.

Object of the present invention is solving this problem, by providing an apparatus and a method for assembling a magnetic position sensor on the rotor of an electrical machine, which allows performing an optimum assembly of the sensor on the rotor with maximum accuracy, so that the magnetic field of the sensor, in particular of the magnet contained in the sensor, is aligned with the magnetic field of the rotor with a minimum error.

The above and other objects and advantages of the invention, as will result from the following description, are obtained with an apparatus and a method for assembling a magnetic position sensor on the rotor of an electrical machine as claimed in the independent claims.

Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described, without departing from the scope of the invention as defined in the enclosed claims.

The present invention will be better described by some preferred embodiments thereof, provided as a non-limiting example, with reference to the enclosed drawings, in which:

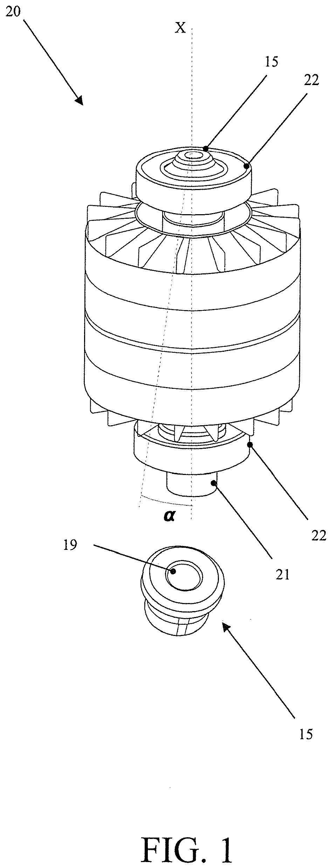

- Figure 1 shows a perspective view of a magnetic position sensor and of a rotor to be assembled with the apparatus according to the invention; and

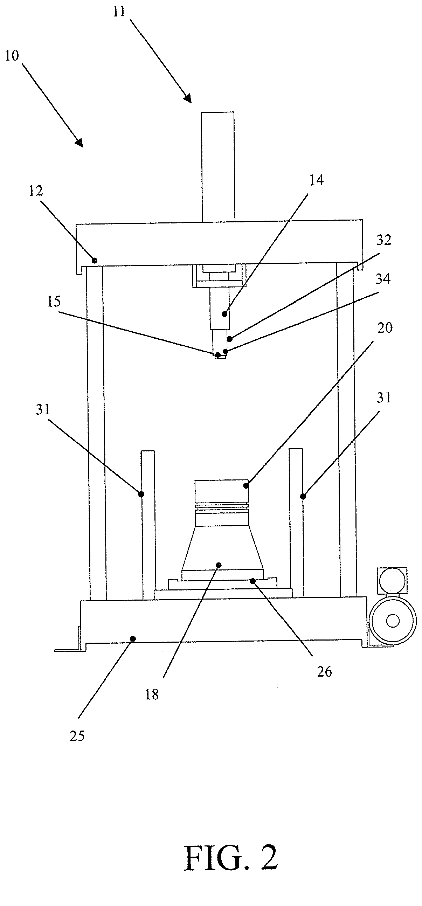

- Figure 2 shows a front view of an apparatus for assembling a magnetic position sensor on the rotor of an electrical machine according to the invention.

With reference to the Figures, an apparatus 10 for assembling a magnetic position sensor on a rotor 20 of an electrical machine will be described below, said rotor 20 comprising a rotation shaft 21 and rotation means 22, for example two ball bearings, connected in a known way to the shaft 21 and configured to connect the rotor 20 in a rotating way to a stator.

In particular the apparatus 10 of the invention is configured to assemble on the rotor 20 of an electrical machine the magnetic element 15 of a magnetic position sensor of a known type, for example of the type disclosed in International patent application WO2018099667.

The magnetic position sensor comprises a fixed element, not shown in the Figures, adapted to be connected to the fixed structure of the electrical machine and preferably comprising a plurality of Hall-effect magnetic sensors; the magnetic position sensor further comprises the magnetic element 15 adapted to be assembled on the rotor 20, preferably fastened to the rotation shaft 21, so that, during the rotation of the rotor 20, the magnetic element 15 is rotated with respect to the fixed element; the magnetic element 15 comprises a magnet 19, for example inserted in a seat obtained therein.

With reference to the Figures, the apparatus 10 for assembling a magnetic position sensor on the rotor 20 of an electrical machine according to the invention comprises: a pressure device 11, preferably a hydraulic press 11, comprising pressure means 14 configured for exerting a pressure on the sensor, in particular on the magnetic element 15, to fasten it in a seat of the rotor 20, preferably obtained on the rotation shaft 21 of the rotor 20; in a preferred way, the pressure means 14 comprise a hydraulic cylinder 14 of a known type comprising a piston actuated by means of a hydraulic circuit.

The apparatus 10 comprises a supporting structure 12 to which the pressure device 11 is connected, for example fastened thereto, and a support 18, associated to the supporting structure 12, against which the rotor is abutted 20 before assembling thereon the position sensor, in particular the magnetic element 15 of the position sensor; for example, the support 18 is abutted or fastened to the supporting structure 12.

In an embodiment of the apparatus 10 of the invention, the supporting structure 12 comprises a base cross-member 25 to which the support 18 is associated, for example abutted or fastened; the supporting structure 12 can comprise a plate 26 connected, preferably assembled sliding, to the base cross-member 25, on which the support 18 is assembled.

For example, the rotation means 22 are abutted or fastened to the support 18, preferably to the base cross-member 25 or to the plate 26 connected thereto, so that the rotor 20 is free of rotating under the action of a magnetic field, as will be explained below in more detail.

The apparatus 10 further comprises magnetic means 31, 32 configured to create a magnetic field which crosses the rotor 20 and the magnetic element 15, and in particular the magnet 19 inserted therein, in order to orient the rotor 20 and the position sensor, in particular the magnetic element 15, according to said magnetic field, to align the magnetic field of the magnet 19 with the magnetic field of the rotor with a minimum error, preferably so that the axis X of the shaft 21 of the rotor 20 forms with the axis of the magnet 19 an angle α less than 5°.

The apparatus 10 further comprises connecting and orienting means 34 connected to the pressure means 14 and configured to connect the magnetic element 15 to the pressure means 14, so that the magnetic element 15 is free of being oriented under the action of the magnetic field created by the magnetic means 31, 32, aligning the magnetic field of the magnetic element 15 to the magnetic field created by the magnetic means 31, 32.

In a preferred way, the connecting and orienting means 34 are connected to the magnetic means 32, for example fastened thereto, in turn connected to the pressure means 14. The connecting and orienting means comprise an air bearing 34 of a known type connected to the magnetic means 32 and to the magnetic element 15 and configured to allow the magnetic element 15 rotation and/or oscillation movements and thereby align the magnetic field of the magnetic element 15 to the magnetic field created by the magnetic means 31, 32.

For example, the magnetic means 32 are made shaped as a hollow cylinder, and the air bearing 34 is obtained inside them, for example a known pneumatic-static bearing. The apparatus 10 for assembling a magnetic element 15 of a position sensor on the rotor 20 of an electrical machine according to the invention comprises first magnetic means 31, configured to generate a magnetic field which crosses the rotor 20, and second magnetic means 32, configured to generate a magnetic field, aligned with the magnetic field generated by the first magnetic means 31, which crosses the magnetic element 15 of the position sensor, and in particular the magnet 19 inserted therein.

The first magnetic means 31 comprise two magnetic apparatuses arranged one in front of the other at the sides of the support 18, and the second magnetic means 32 comprise a magnetic cylinder fastened to the pressure means 14; as described above in an embodiment of the apparatus 10 of the invention, the magnetic cylinder 32 comprises a seat inside which the air bearing 34 is obtained.

In the operation of the apparatus 10 for assembling a magnetic element 15 of a position sensor on the rotor 20 of an electrical machine according to the invention, in a first step the magnetic element 15 of the position sensor is inserted into the connecting and orienting means 34, and the rotor 20 is abutted onto the support 18 in order to be free of rotating around its own axis X, preferably with the rotation means 22, for example the bearing, abutted onto the support 18.

In a second step, the magnetic means 31, 32 are activated, to create the magnetic field which, by crossing the rotor 20 and the magnet 19 of the magnetic element 15, orients them according to said magnetic field, to align the magnetic field of the magnet 19 with the magnetic field of the rotor with a minimum error, preferably so that the axis X of the shaft 21 of the rotor 20 forms with the axis of the magnet 19 an angle α less than 5°.

Once the magnetic element 15 is in its assembly position, with the magnetic field of the magnet 19 aligned with the magnetic field of the rotor 20, the air flow in the bearing 34 is interrupted, air is removed from inside it and the sensor is kept in position by the friction generated by the attraction force of the magnetic field.

In a third step, the pressure means 14, for example of the hydraulic press, are activated for exerting a force on the magnetic element 15 in order to fasten it, for example with a forced coupling, to the rotor 20, preferably fastening it inside a seat obtained in the shaft 21 of the rotor 20; in a preferred way, the pressure means 14 exert on the magnetic element 15 a force of about 5000 N (500 kg).

Advantageously, the apparatus 10 for assembling a magnetic element 15 of a position sensor on the rotor 20 of an electrical machine according to the invention allows performing an optimum assembly of the magnetic element 15 of the sensor on the rotor 20, allowing to fasten it to the rotor with maximum accuracy, so that the magnetic field of the sensor, in particular of the magnet 19 contained in the rotary part of the sensor, is aligned with the magnetic field of the rotor with a minimum error.

## Claims

1. Apparatus (10) for assembling a magnetic position sensor on a rotor (20) of an electrical machine, the magnetic position sensor comprising a magnetic element (15) having a magnet (19), the rotor (20) having a magnetic field, the apparatus comprising:
- a supporting structure (12),
- a pressure device (11) connected to the supporting structure (12) and comprising pressure means (14) configured for exerting a pressure on
the magnetic element (15) to fasten the magnetic element (15) in a seat of the rotor (20), and
- a support (18), against which the rotor is abutted (20) so that it is free of rotating around its own axis (X), to assemble the magnetic element (15) on the rotor (20),
- magnetic means (31, 32) configured to create a magnetic field which crosses the rotor (20) and the magnetic element (15) of the position sensor in order to orient the rotor (20) and the magnetic element (15) according to said magnetic field, to align the magnetic field of the magnetic element (15) with the magnetic field of the rotor (20),
- the magnetic means comprising first magnetic means (31), configured to generate the magnetic field which crosses the rotor (20), and second magnetic means (32), configured to generate the magnetic field aligned with the magnetic field generated by the first magnetic means (31) which crosses the magnetic element (15) of the position sensor; the apparatus further comprising:
- connecting and orienting means (34) connected to the pressure means (14) and configured to connect the magnetic element (15) of the position sensor to the pressure means (14), so that the magnetic element (15) is free of being oriented under the action of the magnetic field created by the magnetic means (31, 32) aligning the magnetic field of the magnetic element (15) to the magnetic field created by the magnetic means (31, 32);
wherein the first magnetic means (31) comprise two magnetic apparatuses arranged one in front of the other at the sides of the support (18), and the second magnetic means (32) comprise a magnetic cylinder fastened to the pressure means (14);
and the connecting and orienting means comprise an air bearing (34) configured to allow the magnetic element (15) rotation and/or oscillation movements and thereby to align the magnetic field of the magnetic element (15) to the magnetic field created by the magnetic means (31, 32) .

2. Apparatus (10) for assembling a magnetic position sensor on a rotor (20) of an electrical machine according to claim 1, **characterized in that** the connecting and orienting means (34) are connected to the second magnetic means (32).

3. Apparatus (10) for assembling a magnetic position sensor on a rotor (20) of an electrical machine according to claim 1, **characterized in that** the air bearing (34) is connected to the second magnetic means (32).

4. Apparatus (10) for assembling a magnetic position sensor on a rotor (20) of an electrical machine according to claim 1 or 3, **characterized in that** the second magnetic means (32) are made shaped as a hollow cylinder, which comprises the air bearing (34).

5. Method for assembling a magnetic position sensor on the rotor of an electrical machine using an apparatus (10) according to any one of claims 1 to 4, comprising the following steps:
- a first step wherein the magnetic element (15) of the position sensor is inserted into the connecting and orienting means (34), and the rotor (20) is abutted onto the support (18), in order to be free of rotating around its own axis (X);
- a second step wherein the magnetic means (31, 32) are activated to create a magnetic field which, by crossing the rotor (20) and the magnetic element (15), orients them according to said magnetic field, to align the magnetic field of the magnetic element (15) with the magnetic field of the rotor (20);
- a third step wherein the pressure means (14) are activated for exerting a force on the magnetic element (15) in order to fasten it to the rotor (20) .

6. Method for assembling a magnetic position sensor on the rotor of an electrical machine according to claim 5, **characterized in that**, in the third step, the pressure means (14) exert on the magnetic element (15) a force of about 5000 N and at the end of the third step, the axis (X) of the rotor (20) forms with the axis of the magnetic element (15) an angle (a) less than 5°.

## Patentansprüche

1. Vorrichtung (10) zur Montage eines magnetischen Positionssensors an einem Rotor (20) einer elektrischen Maschine, wobei der magnetische Positionssensor ein magnetisches Element (15) mit einem Magneten (19) umfasst, wobei der Rotor (20) ein Magnetfeld aufweist, wobei die Vorrichtung umfasst:
- eine Stützstruktur (12),
- eine Druckvorrichtung (11), die mit der Tragstruktur (12) verbunden ist und Druckmittel (14) umfasst, die dazu konfiguriert sind, Druck auf das Magnetelement (15) auszuüben, um das Magnetelement (15) in einem Sitz des Rotors (20) zu fixieren,
- eine Halterung (18), auf der der Rotor (20) so platziert ist, dass er sich frei um seine Achse (X) drehen kann, um das magnetische Element (15) am Rotor (20) zu befestigen, und
- magnetische Mittel (31, 32), die so konfiguriert sind, dass sie ein Magnetfeld erzeugen, das durch den Rotor (20) und das magnetische Element (15) des Positionssensors verläuft, um den Rotor (20) und das magnetische Element (15) entsprechend auszurichten um das Magnetfeld des Magnetelements (15) auf das Magnetfeld des Rotors (20) auszurichten,
- die magnetischen Mittel umfassen erste magnetische Mittel (31), die so konfiguriert sind, dass sie ein Magnetfeld erzeugen, das durch den Rotor (20) verläuft, und zweite magnetische Mittel (32), die so konfiguriert sind, dass sie das Magnetfeld erzeugen, das auf das vom ersten erzeugte Magnetfeld ausgerichtet ist magnetische Mittel (31), die durch das magnetische Element (15) des Positionssensors verlaufen;
die Vorrichtung umfasst außerdem:
- Verbindungs- und Ausrichtungsmittel (34), die mit dem Druckmittel (14) verbunden und so konfiguriert sind, dass sie das magnetische Element (15) des Positionssensors mit dem Druckmittel (14) verbinden, so dass sich ein magnetisches Element (15) frei ausrichten kann selbst unter der Wirkung des von den Magnetmitteln (31, 32) erzeugten Magnetfelds das Magnetfeld des Magnetelements (15) auf das von den Magnetmitteln (31, 32) erzeugte Magnetfeld ausrichtet;
wobei die ersten magnetischen Mittel (31) zwei magnetische Vorrichtungen umfassen, die einander gegenüberliegend an den Seiten des Trägers (18) angeordnet sind, und die zweiten magnetischen Mittel (32) einen magnetischen Zylinder umfassen, der an den Druckmitteln (14) befestigt ist;
und die Verbindungs- und Ausrichtungsmittel umfassen ein Luftlager (34), das so konfiguriert ist, dass es Dreh- und/oder Oszillationsbewegungen des Magnetelements (15) ermöglicht und dadurch das Magnetfeld des Magnetelements (15) auf das durch magnetische Medien erzeugte Magnetfeld ausrichtet (31, 32).

2. Vorrichtung (10) zur Montage eines magnetischen Positionssensors an einem Rotor (20) einer elektrischen Maschine nach Anspruch 1, **dadurch gekennzeichnet, dass** die Verbindungs- und Ausrichtungsmittel (34) mit den zweiten magnetischen Mitteln (32) verbunden sind.

3. Vorrichtung (10) zur Montage eines magnetischen Positionssensors an einem Rotor (20) einer elektrischen Maschine nach Anspruch 1, **dadurch gekennzeichnet, dass** das Luftlager (34) mit dem zweiten magnetischen Mittel (32) verbunden ist.

4. Vorrichtung (10) zur Montage eines magnetischen Positionssensors an einem Rotor (20) einer elektrischen Maschine nach Anspruch 1 oder 3, **dadurch gekennzeichnet, dass** die zweiten magnetischen Mittel (32) in Form eines Hohlzylinders ausgeführt sind beinhaltet das Luftlager (34).

5. Verfahren zur Montage eines magnetischen Positionssensors am Rotor einer elektrischen Maschine unter Verwendung einer Vorrichtung (10) nach einem der Ansprüche 1 bis 4, umfassend die folgenden Schritte:
- eine erste Phase, in der das magnetische Element (15) des Positionssensors in die Verbindungs- und Ausrichtungsmittel (34) eingesetzt wird und der Rotor (20) frei drehbar auf dem Träger (18) platziert wird um seine Achse (X);
- eine zweite Phase, in der die Magnetmittel (31, 32) aktiviert werden, um ein Magnetfeld zu erzeugen, das den Rotor (20) und das Magnetelement (15) kreuzt und diese entsprechend dem Magnetfeld ausrichtet, um das Magnetfeld auszurichten das Magnetelement (15) mit dem Magnetfeld des Rotors (20);
- eine dritte Phase, in der die Druckmittel (14) aktiviert werden, um eine Kraft auf das Magnetelement (15) auszuüben, um es am Rotor (20) zu befestigen.

6. Verfahren zur Montage eines magnetischen Positionssensors am Rotor einer elektrischen Maschine nach Anspruch 5, **dadurch gekennzeichnet, dass** in der dritten Phase die Druckmittel (14) eine Kraft von etwa 5000 N auf das Magnetelement (15) ausüben und am Ende der dritten Phase bildet die Achse (X) des Rotors (20) mit der Achse des Magnetelements (15) einen Winkel (α) von weniger als 5°.

## Revendications

1. Appareil (10) pour monter un capteur magnétique de position sur un rotor (20) d'une machine électrique, le capteur magnétique de position comprenant un élément magnétique (15) comportant un aimant (19), le rotor (20) comportant un champ magnétique , l'appareil comprenant:
- une structure de support (12),
- un dispositif de pression (11) relié à la structure support (12) et comprenant des moyens de pression (14) configurés pour exercer une pression sur l'élément magnétique (15) pour fixer l'élément magnétique (15) dans un siège du rotor (20), et
- un support (18), sur lequel le rotor (20) est posé libre en rotation autour de son axe (X), pour monter l'élément magnétique (15) sur le rotor (20),
- des moyens magnétiques (31, 32) configurés pour créer un champ magnétique traversant le rotor (20) et l'élément magnétique (15) du capteur de position de manière à orienter le rotor (20) et l'élément magnétique (15) selon audit champ magnétique, pour aligner le champ magnétique de l'élément magnétique (15) avec le champ magnétique du rotor (20),
- les moyens magnétiques comprenant des premiers moyens magnétiques (31), configurés pour générer un champ magnétique qui traverse le rotor (20), et des seconds moyens magnétiques (32), configurés pour générer le champ magnétique aligné sur le champ magnétique généré par le premier des moyens magnétiques (31) qui traversent l'élément magnétique (15) du capteur de position;
l'appareil comprenant également:
- des moyens de connexion et d'orientation (34) reliés aux moyens de pression (14) et configurés pour relier l'élément magnétique (15) du capteur de position aux moyens de pression (14), de sorte qu'un élément magnétique (15) soit libre de s'orienter lui-même sous l'action du champ magnétique créé par les moyens magnétiques (31, 32) alignant le champ magnétique de l'élément magnétique (15) sur le champ magnétique créé par les moyens magnétiques (31, 32);
dans lequel les premiers moyens magnétiques (31) comprennent deux dispositifs magnétiques disposés en vis-à-vis sur les côtés du support (18), et les seconds moyens magnétiques (32) comprennent un cylindre magnétique fixé aux moyens de pression (14);
et les moyens de connexion et d'orientation comprennent un palier à air (34) configuré pour permettre à l'élément magnétique (15) des mouvements de rotation et/ou d'oscillation et ainsi aligner le champ magnétique de l'élément magnétique (15) sur le champ magnétique créé par le support magnétique (31, 32).

2. Appareil (10) de montage d'un capteur magnétique de position sur un rotor (20) d'une machine électrique selon la revendication 1, **caractérisé en ce que** les moyens de connexion et d'orientation (34) sont reliés aux seconds moyens magnétiques (32).

3. Appareil (10) de montage d'un capteur magnétique de position sur un rotor (20) d'une machine électrique selon la revendication 1, **caractérisé en ce que** le palier à air (34) est relié au deuxième moyen magnétique (32).

4. Appareil (10) pour monter un capteur magnétique de position sur un rotor (20) d'une machine électrique selon la revendication 1 ou 3, **caractérisé en ce que** les seconds moyens magnétiques (32) sont réalisés sous la forme d'un cylindre creux, qui comprend le palier à air (34).

5. Procédé de montage d'un capteur magnétique de position sur le rotor d'une machine électrique utilisant un appareil (10) selon l'une quelconque des revendications 1 à 4, comprenant les étapes suivantes:
- une première phase dans laquelle l'élément magnétique (15) du capteur de position est inséré dans les moyens de connexion et d'orientation (34), et le rotor (20) est posé sur le support (18), de manière à être libre en rotation autour de son axe (X);
- une deuxième phase dans laquelle les moyens magnétiques (31, 32) sont activés pour créer un champ magnétique qui, traversant le rotor (20) et l'élément magnétique (15) les oriente en fonction dudit champ magnétique, pour aligner le champ magnétique de l'élément magnétique (15) avec le champ magnétique du rotor (20);
- une troisième phase dans laquelle les moyens de pression (14) sont activés pour exercer une force sur l'élément magnétique (15) de manière à le fixer au rotor (20).

6. Procédé de montage d'un capteur magnétique de position sur le rotor d'une machine électrique selon la revendication 5, **caractérisé en ce que**, dans la troisième phase, les moyens de pression (14) exercent sur l'élément magnétique (15) une force d'environ 5000 N et à la fin de la troisième phase, l'axe (X) du rotor (20) forme un angle (α) inférieur à 5° avec l'axe de l'élément magnétique (15).
